# EUROPÄISCHE PATENTSCHRIFT

(11) **EP 0 792 508 B1**
(45) Veröffentlichungstag und Bekanntmachung des Hinweises auf die Patenterteilung: **17.02.1999**
(21) Anmeldenummer: 95936944.8
(22) Anmeldetag: 17.11.1995
(51) Int. Cl.: G21C 9/016

(54) **AUSBREITUNGSRAUM ZUR AUFNAHME EINES ABSCHMELZENDEN REAKTORKERNS SOWIE VERFAHREN ZUR WÄRMEABFUHR AUS DEM AUSBREITUNGSRAUM**
EXPANSION CHAMBER FOR A MELTING REACTOR CORE AND PROCESS FOR DISSIPATING HEAT THEREFROM
CHAMBRE DE DISSEMINATION DESTINEE A RECUEILLIR LE COEUR D'UN REACTEUR EN FUSION ET PROCEDE DE DISSIPATION DE LA CHALEUR PROVENANT DE LADITE CHAMBRE

(30) Priorität: 18.11.1994 DE 4441170
(43) Veröffentlichungstag der Anmeldung: 03.09.1997
(73) Patentinhaber: SIEMENS AKTIENGESELLSCHAFT, 80333 München (DE)
(72) Erfinder: GOEBEL, Andreas, D-91077 Neunkirchen (DE); HOLLMANN, Josef, D-96132 Schlüsselfeld (DE); WISTUBA, Lothar, D-91074 Herzogenaurach (DE); HAU, Gerhard, D-72461 Albstadt (DE); BITTERMANN, Dietmar, D-90765 Fürth (DE); KOEHLER, Wolfgang, D-90562 Kalchreuth (DE)
(86) Internationale Anmeldenummer: DE9501614
(87) Internationale Veröffentlichungsnummer: WO9616413

(56) Entgegenhaltungen:
- EP-A- 0 541 167
- DE-A- 2 035 089
- US-A- 4 342 621
- KERNTECHNIK, Bd. 59, Nr. 4/5, August 1994 MUNCHEN DE, Seiten 151-155, XP 000457567 B. KUCZERA, W EGLIN ET AL. 'Towards an enhanced quality in pressurized water reactor safety'

## Beschreibung

Die Erfindung betrifft einen Ausbreitungsraum zur Aufnahme von Kernschmelze eines Reaktorkerns einer Kernkraftanlage und ein Verfahren zur Abfuhr von in dem Ausbreitungsraum auftretender, insbesondere durch Kernschmelze hervorgerufener, Warme.

Zur Aufnahme und Kühlung von Kernschmelze eines abschmelzenden Reaktorkerns einer Kernkraftanlage sind zwei unterschiedliche Konzepte bekannt. Bei dem in der DE 40 41 295 A1 beschriebenen Konzept, welches als Tiegelkonzept bezeichnet wird, ist bei einer Kernkraftanlage, die einen Reaktordruckbehälter enthält, welcher in einer Reaktorkaverne angeordnet und einen Reaktorkern umfaßt, unmittelbar unterhalb des Reaktordruckbehälters ein tiegelartiger Auffangbehälter zur Aufnahme von Kernschmelze angeordnet. Der Auffangbehälter ist an seiner Innenseite mit einem Schutzmantel zum Schutz gegen in den Auffangbehälter gelangende Kernschmelze ausgekleidet. An seiner Außenseite ist der Auffangbehälter durch Kühlrohre und Kühlschachte, welche bei Auftreten einer Kernschmelze mit Wasser aus dem Reaktorsumpf gefüllt werden, kühlbar. Weiterhin führt eine Flutleitung von dem Reaktorsumpf in den Auffangbehälter, so daß eine Benetzung der Oberfläche der Kernschmelze mit Wasser aus dem Reaktorsumpf gewährleistet ist. Durch die Kühlung der Außenseite des Auffangbehälters sowie der Kühlung der Oberfläche der Kernschmelze entstehender Wasserdampf steigt innerhalb des den Reaktorsumpf und die Reaktorkaverne umgebenden Sicherheitsbehälters auf und kondensiert an dessen oberen Bereich, von wo das kondensierte Kühlwasser in den Reaktorsumpf zurückströmt.

Bei dem anderen Konzept, welches als Ausbreitungskonzept bezeichnet wird, ist gemäß der EP 0 563 739 A1 am Boden der Reaktorkaverne ein Ablauf vorgesehen, der mit einem geodätisch unterhalb und seitlich des Reaktordruckbehälters angeordneten Ausbreitungsraum verbunden ist. Der Ausbreitungsraum ist mit Wasser gefüllt, wobei der Wasserspiegel tiefer liegt als der tiefste Bereich des Bodens der Reaktorkaverne. Durch die Wärmeentwicklung der Kernschmelze in dem Ausbreitungsraum entstehender Wasserdampf steigt innerhalb der Kernkraftanlage auf und wird an einem oberen Wandbereich des Reaktorsicherheitsbehälters oder durch eine Sprühanlage kondensiert. Der kondensierte Wasserdampf kann in den Ausbreitungsraum zurückströmen, so daß eine kontinuierliche Kühlung der Kernschmelze erfolgt.

In der DE 43 97 543 A1 ist ein Wärmeabfuhrsystem eines Druckwasserreaktors beschrieben, welcher in einem Sicherheitsbehälter einen Reaktorkern und ein Sumpfvolumen zur Aufnahme von Kühlwasser aufweist. Zur Abfuhr von Wärme aus dem Kühlwasser des Sumpfvolumens sind innerhalb des Sumpfvolumens Kühlrohre angeordnet, die über Vor- und Rücklaufleitungen an einen Zwischenkühler angeschlossen sind. Die Kühlrohre sind in bekannter Weise spiralartig oder mäanderförmig innerhalb des Sumpfvolumens verlegt, so daß sie von Kühlwasser des Sumpfvolumens bedeckt sind. Eine Kernkraftanlage, für welche das Wärmeabfuhrsystem einsetzbar ist, weist unmittelbar unterhalb des Reaktordruckbehälters einen Auffangbehälter auf, welcher an seiner Außenseite mittels des Kühlwassers aus dem Sumpfvolumen kühlbar ist. Das Sumpfvolumen für Kühlwasser mit den Kühlrohren ist von dem Auffangbehälter für die Kernschmelze räumlich getrennt, so daß vom Ort der Wärmeentstehung zum Ort der Wärmeübertragung ein großräumiger Wärmetransport stattfinden muß.

Aufgabe der Erfindung ist es, einen Ausbreitungsraum zur Aufnahme von Kernschmelze anzugeben, welcher eine effektivere Kühlung von Kernschmelze gewährleistet und den möglichen Eintrag von radioaktiv kontaminiertem Wasserdampf in den Sicherheitsbehälters einer Kernkraftanlage vermindert. Eine weitere Aufgabe der Erfindung besteht in der Angabe eines Verfahrens zur Abfuhr von in dem Ausbreitungsraum auftretender, insbesondere durch Kernschmelze hervorgerufener, Wärme.

Erfindungsgemäß wird die auf einen Ausbreitungsraum gerichtete Aufgabe durch einen Ausbreitungsraum zur Aufnahme und großflächigen Ausbreitung von Kernschmelze eines Reaktorkerns einer Kernkraftanlage gelöst, bei welchem an zumindest einer Wand und/oder einer Decke des Ausbreitungsraums Kühlrohre zur Wärmeabfuhr aus dem Ausbreitungsraum hinaus angeordnet sind.

Die Kühlrohre zur Wärmeabfuhr, die zumindest an einer Wand und/oder einer Decke des Ausbreitungsraumes angeordnet und bevorzugt mit einem geschlossenen Kühlkreislauf verbunden sind, ermöglichen eine effektive Abfuhr von Wärme aus dem Ausbreitungsraum. Sie eignen sich besonders zur Abfuhr von Wärme, welche in einem Kühlfluid durch die Nachzerfallswärme einer in dem Ausbreitungsraum einströmenden bzw. befindlichen Kernschmelze entsteht. Das Kühlfluid kann dabei vor Eintreffen der Kernschmelze in dem Ausbreitungsraum gespeichert sein oder nach einer Ausbreitung der Kernschmelze von einem separaten Flutbehälter in den Ausbreitungsraum eingespeist werden. Durch eine Anordnung der Kühlrohre an einer Wand und/oder einer Decke des Ausbreitungsraumes ist ein effektiver Naturumlauf des Kühlfluides in dem Ausbreitungsraum einstellbar, wodurch die Kernschmelze noch effektiver gekühlt wird. Die Kühlrohre gewährleisten somit eine mittelbare Kühlung der Kernschmelze, ohne in ein Kühlsystem des von der Kernschmelze ausfüllbaren Raumbereiches des Ausbereitungsraumes eingebunden zu sein. Die Kühlung der mit der Kernschmeleze direkt in Kontakt kommenden Boden- und Wandpartien erfolgt vorzugsweise über ein hierfür eigens vorgesehenes Kühlsystem. Gegebenenfalls können auch die Kühlrohre mit einem solchen Kühlsystem verbunden sein. Es wird eine langfristige Ausdampfung des Kühlfluides in den Sicherheitsbehälter der Kernkraftanlage weitgehend vermieden, so daß auch ein Eintrag von radioaktiven Partikeln in die Atmosphäre des Sicherheitsbehälters vermieden wird. Durch eine Befestigung der Kühlrohre an der Wand und/oder der Decke sind diese gegenüber Druckwellen weitgehend unempfindlich. Die Kühlrohre können darüber hinaus gegen eine intensive Wärmestrahlung der unbedeckten Kernschmelze durch Schutzbeschichtungen oder Schutzwände geschützt werden. Solche Maßnahmen bieten ebenfalls einen Schutz gegenüber infolge eventuell auftretender Dampfexplosionen in dem Ausbreitungsraum geschoßartig sich ausbreitender Fragmente der Kernschmelze oder Betonbruchstücken. Durch die Kühlrohre wird der in dem Ausbreitungsraum entstehende Dampf des Kühlfluids, insbesondere Kühlwasserdampf, großteils kondensiert, wodurch der Dampfeintrag in die Atmosphäre des Sicherheitsbehälters effektiv reduziert wird. Eine langfristige Kühlung der Kernschmelze ist somit durch die effektive Wärmeabfuhr gewährleistet.

Vorzugsweise sind die Kühlrohre zu plattenartigen Wärmetauschelementen zusammengefaßt. Insbesondere werden die Kühlrohre mittels Stegverbindungen aneinandergereiht, wodurch große Kühl- und Wärmetauschflächen hergestellt werden.

Vorzugsweise münden die Kühlrohre in Sammler. Hierdurch ist nur eine begrenzte Anzahl von Durchführungen durch die Wand und/oder die Decke des Ausbreitungsraums erforderlich. Weiterhin können auf diese Art und Weise Kühlrohre einfach zu Wärmetauschelementen zusammengefaßt werden, die jeweils in einen Sammler münden.

Die an der Decke angeordnete, insbesondere einbetonierten, Kühlrohre sind vorzugsweise gegenüber der Horizontalen geneigt. Dies begünstigt die Strömung eines zweiten Kühlfluids innerhalb der Kühlrohre. Bei entsprechender Einbindung der Kühlrohre in einen geschlossenen Kühlkreis mit einem Wärmetauscher ist auch in diesem Kühlkreis ein Naturumlauf des zweiten Kühlfluids, insbesondere Wassers, erreichbar. Der Kühlkreislauf kann auch aktiv, d.h. insbesondere durch Förderpumpen, betrieben werden.

Zum Schutz der Kühlrohre gegenüber geschoßartig sich ausbreitender Teile sowie gegen die Wärmestrahlung der Kernschmelze sind diese bevorzugt hinter einer Konvektions- und Schutzstruktur angeordnet. Diese Konvektions- und Schutzstruktur kann so ausgebildet sein, insbesondere gegenüber der Horizontalen geneigt sein, daß die Ausbildung eines Naturumlaufes des ersten Kühlfluids in dem Ausbreitungsraum unterstützt wird. Eine Konvektionsströmung des ersten Kühlfluids um die Konvektions- und Schutzstruktur sichert eine effektive Kühlung. Durch eine Abschirmung der Kühlrohre gegenüber der Wärmestrahlung der Kernschmelze wird die Gefahr einer direkten Bestrahlung durch die unbedeckte Kernschmelze verhindert, so daß ein Durchschmelzen der Kühlrohre sicher vermieden ist.

Vorteilhafterweise ist auch ein mit dem Ausbreitungsraum verbundener vertikal verlaufender Abblaseschacht, insbesondere an seinen Wänden, mit Kühlrohren belegt. Ein durch den Abblaseschacht in die Atmosphäre des Sicherheitsbehälters aufsteigender Dampf des ersten Kühlfluids wird an den Kühlrohren in dem Abblaseschacht weitgehend kondensiert, so daß sowohl ein Druckaufbau sowie eine Anreicherung der Atmosphäre des Sicherheitsbehälters mit radioaktiven Partikeln aus dem Ausbreitungsraum reduziert oder sogar weitgehend vermieden wird.

Vorzugsweise sind die Kühlrohre mit einem Wärmeabfuhrsystem verbunden, welches einen außerhalb des Ausbreitungsraums angeordneten Wärmetauscher umfaßt, der primärseitig mit den Kühlrohren verbunden und sekundärseitig mit einer Wärmesenke verbindbar ist. Die Wärmesenke kann dabei eine außerhalb der Kernkraftanlage angeordnete Kühleinrichtung, wie z.B. ein Kühlturm oder ein großes Wasserreservoir, sein. Das Wärmeabfuhrsystem ist im Naturumlauf arbeitend ausgestaltbar sowie als aktives Wärmeabfuhrsystem mit Förderpumpen ausführbar. Der Ausbreitungsraum liegt innerhalb des Sicherheitsbehälters der Kernkraftanlage, und der Wärmetauscher ist bevorzugt außerhalb des Sicherheitsbehälters angeordnet. Selbst bei einer Undichtigkeit innerhalb des Wärmeabfuhrsystems, insbesondere der Kühlrohre, gelangt radioaktiv belastetes Kühlfluid nicht aus der Kernkraftanlage heraus, da der Wärmetauscher für den Austritt des Kühlfluids eine zusätzliche Barriere darstellt.

Vorzugsweise ist zwischen dem Wärmetauscher und den Kühlrohren ein Druckhalter zur Einspeisung des zweiten Kühlfluids angeordnet. Hierdurch kann bei einer eventuellen Leckage in dem Wärmeabfuhrsystem ein zweites Kühlfluid in ausreichender Menge nachgespeist werden, so daß eine Kühlung der Kernschmelze über das Wärmeabfuhrsystem gewährleistet bleibt. Der Druckhalter ist vorzugsweise extern bespeisbar, d.h. das zweite Kühlfluid kann von außen in großen Mengen zugeführt werden.

Vorzugsweise ist der Ausbreitungsraum vor Eintritt einer Kernschmelze weitgehend trocken und Kühlfluid wird ihm nach Eintritt der Kernschmelze in ausreichender Menge zugeführt. Der Ausbreitungsraum ist über zumindest eine Flutleitung mit einem Flutbehälter verbunden, welcher bevorzugt innerhalb des Sicherheitsbehälters liegt. Die Flutleitung ist während eines normalen Betriebs der Kernkraftanlage verschlossen und öffnet auf passive Art und Weise nach Eintritt der Kernschmelze in den Ausbreitungsraum. Hierzu ist die Flutleitung beispielsweise in dem Ausbreitungsraum durch eine temperaturabhängig öffnende Verschlußeinrichtung verschlossen. Die Verschlußeinrichtung kann beispielsweise ein bei Temperaturen von 600 °C bis 900 °C aufschmelzendes Material, insbesondere ein Silberlot oder einen Kunststoff, aufweisen. Der Ausbreitungsraum ist bevorzugt geodätisch unterhalb und seitlich der Reaktorkaverne, die den Reaktordruckbehälter mit Reaktorkern trägt, angeordnet. Der Flutbehälter hat ein großes Wasservolumen von beispielsweise 1500 m³ und ist mit einer wasserundurchlässigen Auskleidung versehen. Er steht über Deckenöffnungen mit der Atmosphäre des Sicherheitsbehälters in Verbindung, wodurch in dem Sicherheitsbehälter anfallendes Kondensat in den Flutbehälter zurückgeführt wird.

Die auf ein Verfahren zur Abfuhr von in dem Ausbreitungsraum auftretender, insbesondere durch Kernschmelze hervorgerufener, Wärme gerichtete Aufgabe wird dadurch gelöst, daß
a) ein erstes Kühlfluid nach Öffnen einer passiven Einspeisevorrichtung in den Ausbreitungsraum geleitet und dort erwärmt wird,
b) ein innerer Kühlkreislauf mit Kühlrohren, die innerhalb des Ausbreitungsraums an zumindest einer Wand und/oder einer Decke des Ausbreitungsraums angeordnet und mit einem Wärmetauscher verbunden sind, die Wärme aufnimmt und
c) der Wärmetauscher die Wärme an einen äußeren Kühlkreislauf mit einer Wärmesenke überträgt.

Der innere Kühlkreislauf und der äußere Kühlkreislauf können das gleiche Kühlfluid, insbesondere Wasser, wie der Ausbreitungsraum enthalten. Das erste Kühlfluid wird dem Ausbreitungsraum bevorzugt passiv über einen Flutbehälter zugeführt, der innerhalb des Sicherheitsbehälters angeordnet und über Öffnungen mit der Atmosphäre des Sicherheitsbehälters in Verbindung steht. Die Wärmeabfuhr von der Kernschmelze zu den Kühlrohren erfolgt passiv über eine Naturkonvektion des ersten Kühlfluids, insbesondere Wasser, oder Kondensation von Wasserdampf an den Kühlrohren. Innerhalb des inneren Kühlkreislaufes und des äußeren Kühlkreislaufes sind Umwälzpumpen vorhanden, so daß ein aktiver Wärmetransport erfolgt. Mit dem Verfahren ist eine Wärmeabfuhr aus dem Ausbreitungsraum bei Auftreten von Kernschmelze über einen langen Zeitraum gewährleistet, wodurch eine Kühlung der Kernschmelze sicher erreicht wird. Durch eine Kühlung des ersten Kühlfluids in dem Ausbreitungsraum wird die Dampfbildung vermindert und ein Eintrag von mit dem Dampf mitgeführten radioaktiven Partikeln in die Atmosphäre des Sicherheitsbehälters deutlich vermindert. Durch die zwei voneinander getrennten Kühlkreisläufe kann ein Austrag von Radioaktivität in die Umgebung der Kernkraftanlage nahezu ausgeschlossen werden. Selbst ein aktiv betriebenes Verfahren mit Umwälzpumpen in dem inneren und dem äußeren Kühlkreislauf wird durch passive Mittel, insbesondere über die Einspeisevorrichtung für Kühlfluid in den Ausbreitungsraum, in Gang gesetzt.

Anhand der Zeichnung werden der Ausbreitungsraum zur Aufnahme von Kernschmelze sowie das Verfahren zur Wärmeabfuhr aus dem Ausbreitungsraum näher erläutert. Es zeigen:
- FIG 1: einen Längsschnitt der Kernkraftanlage,
- FIG 2: eine räumliche Darstellung der Kernkraftanlage nach FIG 1,
- FIG 3: einen Querschnitt durch eine Wand des Ausbreitungsraumes,
- FIG 4: einen Längsschnitt des Ausbreitungsraumes entlang einer Decke,
- FIG 5: eine um 90° gedrehte Darstellung der FIG 4,
- FIG 6: einen Längsschnitt durch eine Kernkraftanlage,
- FIG 7: eine schematische Darstellung eines Wärmeabfuhrsystems zur Durchführung des Verfahrens.

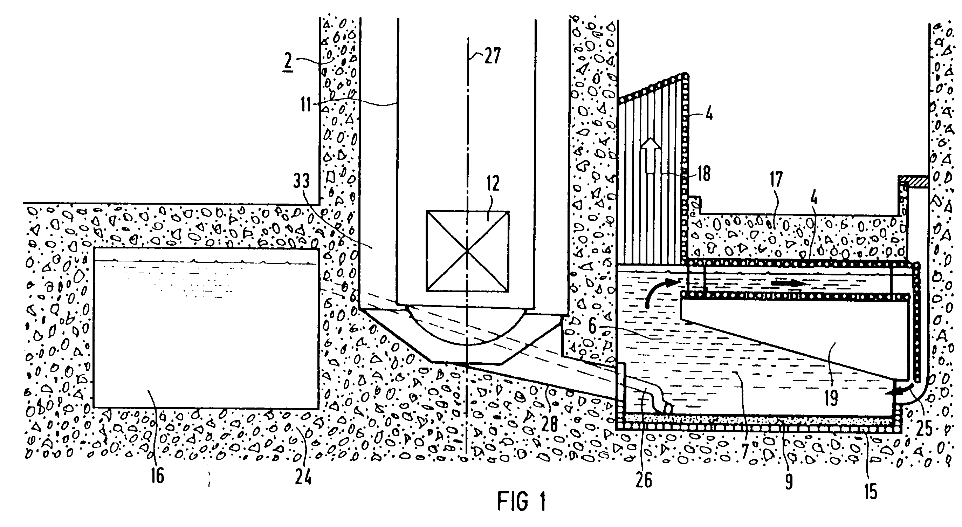

FIG 1 zeigt einen Ausschnitt eines Längsschnittes durch eine Kernkraftanlage 2 mit einer Betonstruktur 24. Die Kernkraftanlage 2 hat eine Hauptachse 27 entlang derer ein Reaktordruckbehälter 11, welcher einen Reaktorkern 12 beinhaltet, angeordnet ist. Der weitgehend um die Hauptachse 27 rotationssymmetrische Reaktordruckbehälter 11 ist in einer durch die Betonstruktur 24 gebildeten Reaktorgrube 33 angeordnet. An die Reaktorgrube 33 schließt sich in ihrem unteren Bereich ein abfallender Ablaufkanal 28 an, welcher in einen Ausbreitungsraum 6 mündet, der geodätisch unterhalb und seitlich der Reaktorgrube 33 liegt. Der Ausbreitungsraum 6 hat eine Decke 17 und einen Boden 15. Der Boden 15 des Ausbreitungsraumes 6 bildet eine große Fläche, auf der sich austretenden Kernschmelze 9 mit einer geringen Schichtdicke und einer großen kühlbaren Oberfläche ausbreiten kann. Die große Oberfläche der Kernschmelze 9 ist durch Kühlfluid 7 kühlbar. Zwischen der Decke 17 und dem Boden 15 ist eine Konvektions- und Schutzstruktur 19, insbesondere eine Betonzwischendecke, angeordnet, deren Unterseite zur Begünstigung einer Konvektionsströmung innerhalb des Ausbreitungsraumes 6 gegenüber der Horizontalen geneigt ist. An der Oberseite der Konvektions- und Schutzstruktur 19 sowie an der Decke 17 sind Kühlrohre 4, die senkrecht zur Zeichenebene verlaufen, befestigt. Die Decke 17 hat in einem an die Reaktorgrube 33 angrenzenden Bereich eine Öffnung, an die ein vertikal verlaufender Abblaseschacht 18 anschließt. Der Abblaseschacht 18 ist mit weiteren Kühlrohren 4 ausgekleidet. Durch die Betonstruktur 24 ist auf etwa gleichem Niveau des Ausbreitungsraumes 6 ein Flutbehälter 16 gebildet. Der Flutbehälter 16 ist mit dem Ausbreitungsraum 6 über eine fallend verlaufende Flutleitung 26 verbunden. Die Flutleitung 26 mündet in der Umgebung des Bodens 15 in den Ausbreitungsraum 6. Hierdurch ist unmittelbar eine sich auf den Boden 15 ausbreitende Kernschmelze 9 durch Kühlfluid 7 des Flutbehälters 16 an ihrer Oberfläche kühlbar. Über die Flutleitung 26 ist erstes Kühlfluid 7, in der Regel Wasser, in den Ausbreitungsraum 6 führbar, so daß der Ausbreitungsraum 6 bis oberhalb der Konvektions- und Schutzstruktur 19 mit Wasser gefüllt werden kann. Die von der Kernschmelze 9 an das Kühlfluid 7 abgegebene Wärme wird über die Kühlrohre 4 aus dem Ausbreitungsraum 6 abgeführt. Zur Abführung der Wärme der unmittelbar mit Kernschmelze 9 in Berührung kommenden Bereiche des Aubreitungsraums 6 dient ein weiteres nicht dargestelltes Kühlsystem. Die Kühlrohre 4 an der Decke 17 und an der Oberseite der Konvektions- und Schutzstruktur 19 sind somit gegenüber direkter Wärmestrahlung der Kernschmelze 9 sowie gegen bei einer eventuellen Dampfexplosion möglicherweise entstehender und sich geschoßartig ausbreitender Bruchstücke, beispielsweise Betonbruchstücke, geschützt. In dem Ausbreitungsraum 6 bildet sich eine Konvektionsströmung, d.h. ein Naturumlauf, des ersten Kühlfluids 7 aus. Möglicherweise in dem Ausbreitungsraum 6 entstehender Wasserdampf kann über den Abblaseschacht 18 in die Atmosphäre eines nichtdargestellten, den Ausbreitungsraum 6 den Reaktordruckbehälter 11 und den Flutbehälter 16 umschließenden Sicherheitsbehälters, austreten. Dieser Wasserdampf wird an den Kühlrohren 4 des Abblaseschachts 18 vorbeigeführt und kondensiert dort zu einem wesentlichen Teil, so daß über Wasserdampf allenfalls geringe Mengen radioaktiver Partikel in die Atmosphäre des Sicherheitsbehälters gelangen können. Auch ein Druckanstieg im Sicherheitsbehälter wird durch die Kondensation weitgehend vermieden.

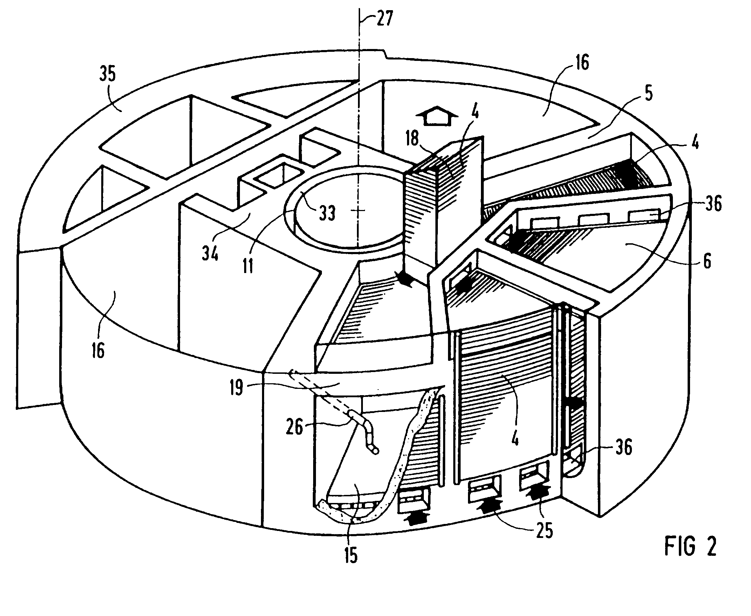

FIG 2 zeigt den Ausschnitt der Kernkraftanlage 2 gemäß FIG 1 in einer räumlichen Darstellung. Eine innere Struktur 34 der Betonstruktur 24 bildet die zur Hauptachse 27 rotationssymmetrische Reaktorgrube 33, in der der Reaktordruckbehälter 11 angeordnet ist. Die innere Struktur 34 ist durch Wände 5 mit einer äußeren zur Hauptachse 27 rotationssymmetrischen Ringstruktur 35 verbunden. Durch die Wände 5, die innere Struktur 34 und die äußere Ringstruktur 35 ist der Ausbreitungsraum 6 gebildet, welcher ein Kreissegment mit einem Öffnungswinkel von etwa 120° einschließt. Zwischen dem Boden 15 und der hier nicht dargestellten Decke des Ausbreitungsraumes 6 ist eine Konvektions- und Schutzstruktur 19 in Form einer Zwischendecke und einer mit dieser Zwischendecke in Verbindung stehenden der äußeren Ringstruktur 35 benachbarten Zwischenwand gebildet. An der dem Boden 15 abgewandten Seite der Konvektions- und Schutzstruktur 19 sind Kühlrohre 4 befestigt. Die Konvektions- und Schutzstruktur 19 enthält Durchlaßöffnungen 36 im Bereich der Decke und des Boden 15 des Ausbreitungsraumes 6 für die Ausbildung eines Naturumlaufes des in dem Ausbreitungsraum befindlichen Kühlfluides 7. Zwischen der Konvektions- und Schutzstruktur 19 und der inneren Struktur 34 ist im Bereich der Decke des Ausbreitungsraumes 6 ein vertikal verlaufender Abblaseschacht 18 angeordnet, der an seinen Wänden ebenfalls Kühlrohre 4 aufweist. Innerhalb der äußeren Ringstruktur 35 ist der Flutbehälter 16 angeordnet, welcher an die Wände 5 des Ausbreitungsraums 6 anschließend durch zwei annähernd kreissegmentartige Räume mit einem Öffnungswinkel von etwa 60° gebildet wird.

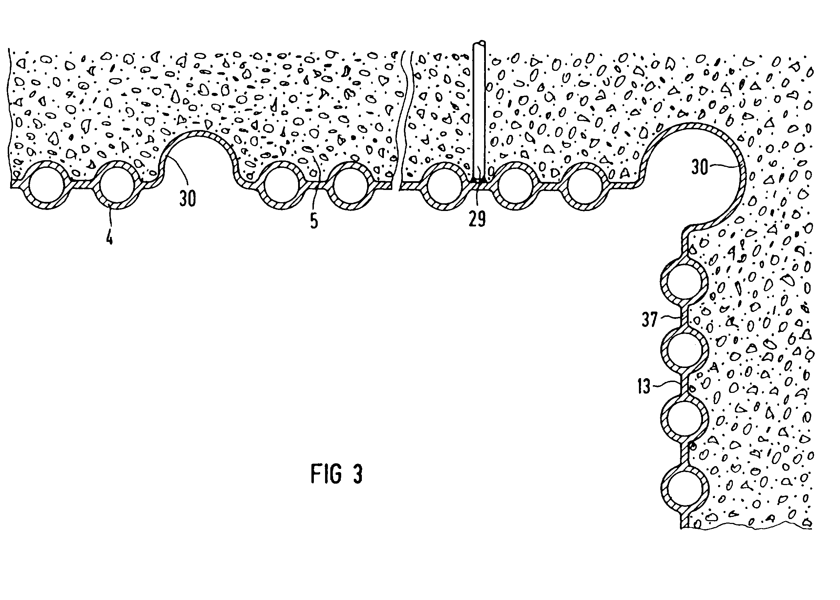

In FIG 3 sind in einem Querschnitt Kühlrohre 4 an einer Wand 5 dargestellt. Mehrere Kühlrohre 4 sind durch Stegverbindungen 37 jeweils zu einem Wärmetauschelement 13 zusammengefaßt. Das Wärmetauschelement 13 ist durch Betonanker 29 an einer Stegverbindung 37 fest mit der Wand 5 verbunden. Benachbarte Wärmetauschelemente 13 sind über an der Wand 5 angeordnete Kompensatorelemente 30 zur Kompensation von Wärmedehnungen miteinander verbunden. Die Kompensatorelemente 30 haben ein etwa U-förmiges Querschnittsprofil, welches in Ecken, an denen zwei Wände 5 aneinanderstoßen, zu einem Dreiviertel-Kreisprofil erweitert sind. Die Kühlrohre 4 können einen Innendurchmesser von 32 mm, eine Wandstärke von 5 mm und einen Abstand von 60 mm voneinander besitzen. Ihre Länge kann 2 m betragen.

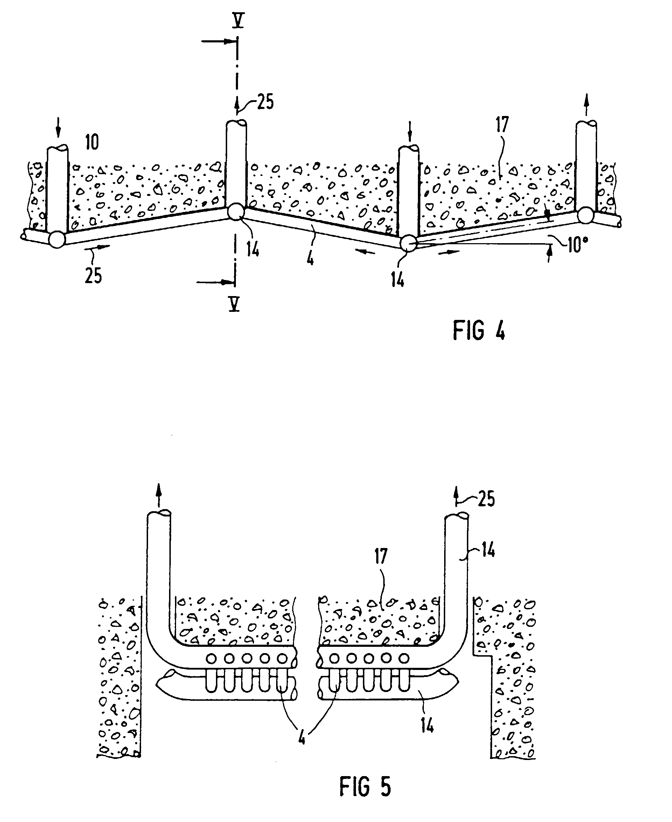

FIG 4 zeigt einen Längsschnitt durch eine Decke 17 des Ausbreitungsraumes 6. An der Unterseite der Decke 17 sind Kühlrohre 4 angeordnet, die jeweils beginnend von einem Sammler 14 steigend verlaufen und in einen weiteren Sammler 14 einmünden. Die Sammler 14 sind in ihrer Höhe alternierend angeordnet, so daß zwischen zwei tiefer liegenden Sammler 14 jeweils ein höher liegender Sammler 14 liegt. Die Steigung der Kühlrohre 4 beträgt etwa 10°. Zur Wärmeabfuhr wird ein zweites Kühlfluid 10 durch die tiefer liegenden Sammler 14 von außerhalb des Ausbreitungsraumes 6 in die an die Decke 17 angeordneten Kühlrohre 4 eingespeist, steigt dort unter Wärmeaufnahme zu dem höher liegenden Sammler 14 auf und strömt durch diese durch die Decke 17 des Ausbreitungsraumes 6 heraus. Auf diese Weise wird durch Wärmeaufnahme des zweiten Kühlfluides 10 die Wärme, welche insbesondere aufgrund einer Kernschmelze in dem Ausbreitungsraum 6 entsteht, langfristig abgeführt.

FIG 5 zeigt die Sammler 14 und Kühlrohre 4 der FIG 4 in dem Schnitt V-V. Jeder Sammler 14 ist hierbei als U ausgebildet mit zwei senkrechten Schenkeln, die durch die Decke 17 hindurch führen, und mit einem in dem Ausbreitungsraum 6 waagrecht verlaufenden Teil, an dem die Kühlrohre angeschlossen sind.

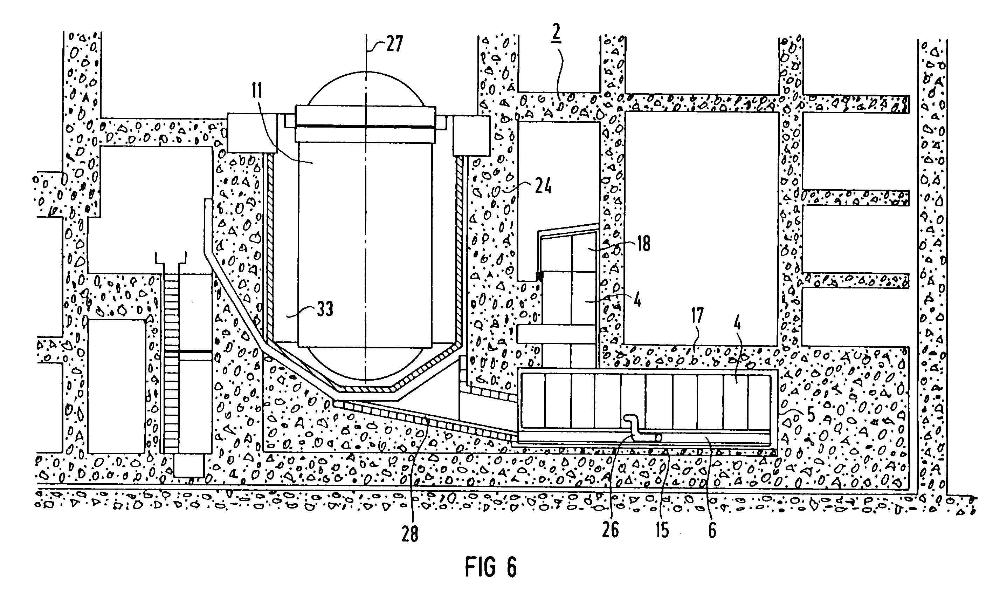

In FIG 6 ist ein zu FIG 1 analoger Längsschnitt durch eine Kernkraftanlage 2 dargestellt. Durch eine Betonstruktur 24 ist eine zur Hauptachse 27 der Kernkraftanlage 2 rotationssymmetrische Reaktorgrube 33 gebildet, in der der Reaktordruckbehälter 11 aufgenommen ist. Ein im Bodenbereich der Reaktorgrube 33 beginnender Ablaufkanal 28 verläuft fallend zu einem Ausbreitungsraum 6 zur Aufnahme von Kernschmelze. Oberhalb des Bodens 15 des Ausbreitungsraumes 6 sind vertikal verlaufende Kühlrohre 4 an den Wänden 5 des Ausbreitungsraumes 6 befestigt. Der Ausbreitungsraum 6 hat eine Decke 17 durch die hindurch ein Abblaseschacht 18, welcher ebenfalls mit Kühlrohren 4 ausgekleidet ist, verläuft. Der Ausbreitungsraum 6 ist analog zu FIG 1 seitlich neben der Reaktorgrube 33 angeordnet, wobei der Boden 15 des Ausbreitungsraums 6 tiefer als die Reaktorgrube 33 liegt.

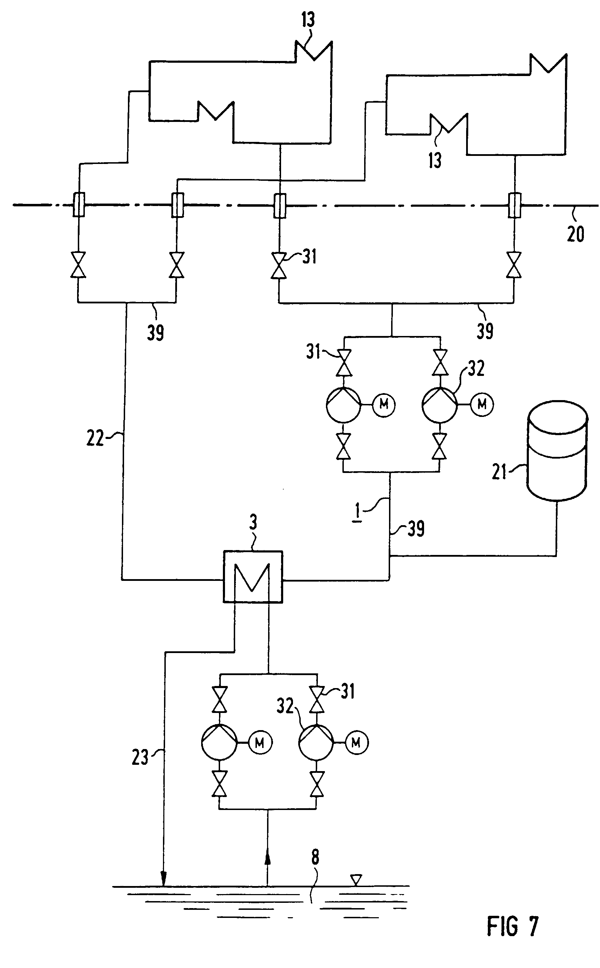

FIG 7 zeigt schematisch ein Wärmeabfuhrsystem 1 zur Wärmeabfuhr von in einem Ausbreitungsraum für Kernschmelze auftretender Wärme. Das Wärmeabfuhrsystem 1 besteht aus einem inneren Kühlkreislauf 22 und einem äußeren Kühlkreislauf 23. Der innere Kühlkreislauf 22 weist die in dem Ausbreitungsraum angeordneten Wärmetauschelemente 13 auf. Der Ausbreitungsraum und damit die Wärmetauschelemente 13 sind innerhalb eines, durch die gestrichelt dargestellte Linie symbolisierten Sicherheitsbehälter 20 angeordnet. Von den Wärmetauschelementen 13 führen Verbindungsleitungen 39 zu einem Wärmetauscher 3, der außerhalb des Sicherheitsbehälters 20 angeordnet ist. In die Verbindungsleitungen 39 sind Ventile 31 sowie motorgetriebene Förderpumpen 32 angeordnet. Mit den Ventilen 31 können im Falle einer Leckage einzelne Wärmetauschelemente 13 aus dem inneren Kühlkreislauf 22 herausgenommen werden. Durch die parallel geschalteten Förderpumpen 32 ist der innere Kühlkreislauf 22 zwangsbetreibbar und redundant ausgeführt. Eine Ausführung des inneren Kühlkreislaufes 22 in einem Naturumlauf ist ebenfalls möglich. In die zu dem Wärmetauscher 3 führende Verbindungsleitung 39 ist zudem ein Druckhalter 21 eingebunden, welcher extern mit dem in den inneren Kühlkreislauf 22 geführten zweiten Kühl fluid 10 nachbespeisbar ist. Hierdurch ist auch im Falle einer Leckage eine ausreichende Menge an zweitem Kühlfluid 10 zur Wärmeabfuhr sichergestellt. Der Wärmetauscher 3, welcher primärseitig über die Verbindungsleitungen 39 mit den Wärmetauschelementen 13 verbunden ist, ist sekundärseitig mit einer Wärmesenke 8 über mit Ventilen 31 absperrbaren und in einer Parallelschaltung angeordneten Förderpumpen 32 in einem Zwangsumlauf verbunden. Im Falle einer Wärmeerzeugung innerhalb des Ausbreitungsraumes 6 aufgrund von Nachzerfallswärme einer Kernschmelze ist durch das zweistufige Wärmeabfuhrsystem 1 eine langfristige Kühlung und Abkühlung der Kernschmelze gewährleistet, wobei insbesondere aufgrund der Zweistufigkeit die Gefahr eines Austrittes von Radioaktivität aus dem Sicherheitsbehälter 20 heraus deutlich verringert ist. Durch die redundante Ausführung der Kühlfluidumwälzung und der Möglichkeit zusätzliches zweites Kühlfluid 10 über den Druckhalter 21 nachzuspeisen ist die Funktionsfähigkeit des Wärmeabfuhrsystems 1 sicher gewährleistet. Die Wärmesenke 8 kann ein großer Wasservorrat außerhalb der Kernkraftanlage sein.

Die Erfindung zeichnet sich durch einen Ausbreitungsraum zur Aufnahme von Kernschmelze eines Reaktorkernes aus, der für eine effektive Wärmeabfuhr Kühlrohre enthält, die zumindest an einer Wand und/oder an einer Decke des Ausbreitungsraumes angeordnet sind. Hierdurch sind die Kühlrohre im Gegensatz zu frei in einen Kühlfluidvorrat verlegten Kühlrohren gegenüber thermomechanischen Belastungen, insbesondere Druckwellen, deutlich beschädigungsunanfälliger. Durch eine in dem Ausbreitungsraum angeordnete Konvektions- und Schutzstruktur zwischen den Kühlrohren und dem zur Aufnahme der Kernschmelze ausgelegten Boden des Ausbreitungsraumes sind die Kühlrohre ebenfalls gegenüber direkter Wärmestrahlung der Kernschmelze effektiv geschützt und es ist im Inneren des Ausbreitungsraumes ein Naturumlauf von Kühlfluid erreichbar. Die Kühlrohre sind als Teil eines zweistufigen Wärmeabfuhrsystems mit einem außerhalb des Sicherheitsbehälters angeordneten Wärmetauscher verbunden. Der Wärmetauscher bildet mit dem Kühlrohren einen inneren Kühlkreislauf, der sowohl zwangsbetrieben als auch im Naturumlauf ausgebildet sein kann. Die von den Kühlrohren in dem Ausbreitungsraum aufgenommene Wärme wird über den Wärmetauscher in einem äußeren Kühlkreislauf an eine Wärmesenke, insbesondere außerhalb der Kernkraftanlage, abgegeben. Hierdurch ist eine langfristige Kühlung von Kernschmelze sicher gewährleistet.

## Patentansprüche

1. Kernkraftanlage (2) mit einem Reaktorkern (12), einer Reaktorgrube (33) und einem geodätisch unterhalb und seitlich der Reaktorgrube (33) angeordneten Ausbreitungsraum (6) zur Aufnahme und großflächigen Ausbreitung von Kernschmelze (9) des Rekatorkerns (12) und zur Aufnahme eines Kühlfluids (7),
**dadurch gekennzeichnet,** daß an zumindest einer Wand (5) und/oder einer Decke (17) des Ausbreitungsraums (6) Kühlrohre (4) zur Wärmeabfuhr aus dem Ausbreitungsraum (6) hinaus angeordnet sind.

2. Kernkraftanlage (2) nach Anspruch 1,
**dadurch gekennzeichnet,** daß an Wänden (5) und an der Decke (17) des Ausbreitungsraumes (6) Kühlrohre (4) angeordnet sind.

3. Kernkraftanlage (2) nach einem der Ansprüche 1 oder 2,
**dadurch gekennzeichnet ,** daß die Kühlrohre (4) zu plattenartigen Wärmetauscherelementen (13) zusammengefaßt sind.

4. Kernkraftanlage (2) nach einem der Ansprüche 1 bis 3,
**dadurch gekennzeichnet,** daß die Kühlrohre (4) in Sammler (14) münden.

5. Kernkraftanlage (2) nach einem der vorhergehenden Ansprüche,
**dadurch gekennzeichnet,** daß die Kühlrohre (4), die an der Decke (17) angeordnet sind, gegenbei der Horizontalen geneigt sind.

6. Kernktaftanlage (2) nach einem der vorhergehenden Ansprüche,
**dadurch gekennzeichnet,** daß im Ausbreitungsraum (6) zwischen einem Boden (15) und der Decke (17) eine Konvektions- und Schutzstruktur (19) vorgesehen ist, um die herum eine Konvektionsströmung von in den Ausbreitungsraum (6) füllbarem Kühlfluid (7) ermöglicht ist und daß zwischen der Konvektions- und Schutzstruktur (19) und der Decke (17) zumindest ein Teil der kühlrohre (4) angeordnet ist.

7. Kernkraftanlage (2) nach einem der vorhergehenden Ansprüche,
**dadurch gekennzeichnet,** daß der Ausbreitungsraum (6) mit einem vertikal verlaufenden Abblaseschacht (18) verbunden ist, der Kühlrohre (4) umfaßt.

8. Kernkraftanlage (2) nach einem der vorhergehenden Ansprüche,
**dadurch gekennzeichnet,** daß der Ausbreitungsraum (6) mit einem Wärmeabfuhrsystem (1) verbunden ist, welches die Kühlrohre (4) und einen außerhalb des Ausbreitungsraumes (6) angeordneten Wärmetauscher (3) umfaßt, welcher Wärmetauscher (3) primärseitig mit den Kühlrohren (4) verbunden und sekundärseitig mit einer Wärmesenke (8) verbindbar ist.

9. Kernkraftanlage (2) mit einem Sicherheitsbehälter (20) nach Anspruch 7,
**dadurch gekennzeichnet,** daß der Ausbreitungsraum (6) innerhalb des Sicherhelrsbehälrers (20) und der Wärmetauscher (3) außerhalb des Sicherheitsbehälters (20) angeordnet ist.

10. Kernkraftanlage (2) nach einem der Ansprüche 8 oder 9,
**dadurch gekennzeichnet,** daß zwischen dem Wärmetauscher (3) und den Kühlrohren (4) ein Druckhalter (21) zur Einspeisung eines weiteren Kühlfluids (10) in das Wärmeabfuhrsystem (1) vorgesehen ist.

11. Kernkraftanlage (2) nach einem der vorhergehenden Ansprüche,
**dadurch gekennzeichnet,** daß der Ausbreitungsraum (6) über eine Flutleitung (26) mit einem Flutbehälter (16) verbunden ist, wobei die Flutleitung (26) verschlossen ist und nach Eintritt der Kernschmelze (9) in den Ausbreitungsraum (6) passiv öffnet.

12. Kernkraftanlage (2) nach einem der vorhergehenden Ansprüche,
**dadurch gekennzeichnet,** daß im Ausbreitungsraum (6) die Kühlrohre (4) geodätisch oberhalb des Bodens (15) und der in einem Störfall sich ausbreitenden Kernschmelze (9) angeordnet sind.

13. Verfahren zur Abfuhr von in einem Ausbreitungsraum (6) einer Kernkraftanlage (2) auftretender, insbesondere durch Kernschmelze (9) hervorgerufener, Wärme, bei dem
a) ein erstes Kühlfluid (7) nach Öffnen einer passiven Einspeisevorrichtung (26) in den Ausbreitungsraum (6) geleitet und dort erwärmt wird,
b) ein innerer Kühlkreislauf (22) mit Kühlrohren (4), in denen ein zweites Kühlfluid strömt und die innerhalb des Ausbreitungsraumes (6) an zumindest einer Wand (5) und/oder einer Decke (17) des Ausbreitungsraumes (6) angeordnet und mit einen Wärmetauscner (3) verbunden sind, die Wärme aufnimmt und
c) der Wämetauscher (3) die Wärme an einen äußeren Kühlkreislauf (23) mit einer Wärmesenke (8) überträgt.

## Claims

1. Nuclear power plant (2) having a reactor core (12), a reactor pit (33) and an expansion chamber (6) which is arranged geodetically below and to the side of the reactor pit (33) and which is for the receiving of and the large-area expansion of core melt (9) of the reactor core (12) and for the receiving of a cooling fluid (7), characterized in that cooling pipes (4) for removing heat from the expansion chamber (6) are arranged on at least one wall (5) and/or on a ceiling (17) of the expansion chamber (6).

2. Nuclear power plant (2) according to claim 1, characterized in that cooling pipes (4) are arranged on walls (5) and on the ceiling (17) of the expansion chamber (6).

3. Nuclear power plant (2) according to one of claims 1 or 2, characterized in that the cooling pipes (4) are combined to form plate-like heat exchanger elements (13).

4. Nuclear power plant (2) according to one of claims 1 to 3, characterized in that the cooling pipes (4) open into collectors (14).

5. Nuclear power plant (2) according to one of the preceding claims, characterized in that the cooling pipes (4) which are arranged on the ceiling (17) are inclined with respect to the horizontal line.

6. Nuclear power plant (2) according to one of the preceding claims, characterized in that a convection and protection structure (19) is provided in the expansion chamber (6) between a floor (15) and the ceiling (17), around which structure (19) a convection flow of cooling fluid (7), which can be poured into the expansion chamber (6), is made possible, and in that at least one portion of the cooling pipes (4) is arranged between the convection and protection structure (19) and the ceiling (17).

7. Nuclear power plant (2) according to one of the preceding claims, characterized in that the expansion chamber (6) is connected to a vertically extending venting shaft (18) which encompasses cooling pipes (4).

8. Nuclear power plant (2) according to one of the preceding claims, characterized in that the expansion chamber (6) is connected to a heat removal system (1) which comprises the cooling pipes (4) and a heat exchanger (3) arranged outside the expansion chamber (6), the heat exchanger (3) being connected on the primary side to the cooling pipes (4) and being connectable on the secondary side to a heat sink (8).

9. Nuclear power plant (2) with a safety container (20) according to claim 7, characterized in that the expansion chamber (6) is arranged inside the safety container (20), and the heat exchanger (3) is arranged outside the safety container (20).

10. Nuclear power plant (2) according to one of claims 8 or 9, characterized in that a pressurizer (21) to supply another cooling fluid (10) into the heat removal system (1) is provided between the heat exchanger (3) and the cooling pipes (4).

11. Nuclear power plant (2) according to one of the preceding claims, characterized in that the expansion chamber (6) is connected by way of a flood line (26) to a flood container (16), with the flood line (26) being closed and, after the entry of the core melt (9) into the expansion chamber (6), opening passively.

12. Nuclear power plant (2) according to one of the preceding claims, characterized in that in the expansion chamber (6) the cooling pipes (4) are arranged geodetically above the floor (15) and the core melt (9) which scatters if there is an accident.

13. Method for the removal of heat which arises in an expansion chamber (6) of a nuclear power plant (2) and which is generated in particular by core melt (9), wherein
a) after a passive supply device (26) is opened, a first cooling fluid (7) is conducted into the expansion chamber (6) and is heated there,
b) an inner cooling circuit (22) with cooling pipes (4) in which a second cooling fluid flows and which are arranged within the expansion chamber (6) on at least one wall (5) and/or a ceiling (17) of the expansion chamber (6) and are connected to a heat exchanger (3) which absorbs heat, and
c) the heat exchanger (3) transfers the heat to an outer cooling circuit (23) with a heat sink (8).

## Revendications

1. Installation de réacteur nucléaire (2) comprenant un coeur (12) du réacteur, une fosse (33) du réacteur et une chambre de dissémination (6) disposée géodésiquement au-dessous et sur le côté de la fosse (33) du réacteur, destinée à recueillir et à disséminer sur une grande surface un produit en fusion (9) du coeur (12) du réacteur et à recueillir un fluide de refroidissement (7), caractérisée en ce que des tuyaux de refroidissement (4) pour dissiper la chaleur provenant de la chambre de dissémination (6) sont disposés sur au moins une paroi (5) et/ou un plafond (17) de la chambre de dissémination (6).

2. Installation de réacteur nucléaire (2) selon la revendication 1, caractérisée en ce que des tuyaux de refroidissement (4) sont disposés sur des parois (5) et au plafond (17) de la chambre de dissémination (6).

3. Installation de réacteur nucléaire (2) selon l'une des revendications 1 ou 2, caractérisée en ce que les tuyaux de refroidissement (4) sont rassemblés en éléments échangeurs de chaleur (13) en forme de plaque.

4. Installation de réacteur nucléaire (2) selon l'une des revendications 1 à 3, caractérisée en ce que les tuyaux de refroidissement (4) débouchent dans des collecteurs (14).

5. Installation de réacteur nucléaire (2) selon l'une quelconque des revendications précédentes, caractérisée en ce que les tuyaux de refroidissement (4) disposés au plafond (17) sont inclinés par rapport à l'horizontale.

6. Installation de réacteur nucléaire (2) selon l'une quelconque des revendications précédentes, caractérisée en ce qu'une structure de convection et de protection (19) est prévue dans la chambre de dissémination (6), entre un fond (15) et le plafond (17), autour de laquelle un écoulement par convection d'un fluide de refroidissement (7) pouvant être introduit dans la chambre de dissémination (6) est possible, et en ce que, au moins, une partie des tuyaux de refroidissement (4) est disposée entre la structure de convection et de protection (19) et le plafond (17).

7. Installation de réacteur nucléaire (2) selon l'une quelconque des revendications précédentes, caractérisée en ce que la chambre de dissémination (6) est reliée à un puits de purge (18) s'étendant verticalement, qui comporte des tuyaux de refroidissement (4).

8. Installation de réacteur nucléaire (2) selon l'une quelconque des revendications précédentes, caractérisée en ce que la chambre de dissémination (6) est reliée à un système de dissipation de chaleur (1) comprenant les tuyaux de refroidissement (4) et un échangeur de chaleur (3) disposé à l'extérieur de la chambre de dissémination (6), lequel échangeur de chaleur (3) peut être relié, côté circuit primaire, aux tuyaux de refroidissement (4) et, côté circuit secondaire, à un puits de chaleur (8).

9. Installation de réacteur nucléaire (2) pourvue d'une enceinte de confinement (20) selon la revendication 7, caractérisée en ce que la chambre de dissémination (6) est disposée à l'intérieur de l'enceinte de confinement (20) et l'échangeur de chaleur (3) à l'extérieur de l'enceinte de confinement (20).

10. Installation de réacteur nucléaire (2) selon l'une des revendications 8 ou 9, caractérisée en ce qu'un dispositif de maintien de pression (21) permettant d'alimenter le système de dissipation de chaleur (1) avec un autre fluide de refroidissement (10) est prévu entre l'échangeur de chaleur (3) et les tuyaux de refroidissement (4).

11. Installation de réacteur nucléaire (2) selon l'une quelconque des revendications précédentes, caractérisée en ce que la chambre de dissémination (6) est reliée à un réservoir de remplissage (16), par l'intermédiaire d'une conduite de remplissage (26), la conduite de remplissage (26) étant fermée et ouvrant passivement après entrée du produit en fusion (9) du coeur dans la chambre de dissémination (6).

12. Installation de réacteur nucléaire (2) selon l'une quelconque des revendications précédentes, caractérisée en ce que, dans la chambre de dissémination (6), les tuyaux de refroidissement (4) sont disposés géodésiquement au-dessus du fond (15) et du produit en fusion (9) du coeur se disséminant en cas d'accident.

13. Procédé de dissipation de la chaleur se produisant dans une chambre de dissémination (6) d'une installation de réacteur nucléaire (2) et provoquée en particulier par le produit en fusion (9) du coeur, dans lequel
a) après ouverture d'un dispositif d'alimentation (26) passif, un premier fluide de refroidissement (7) est introduit dans la chambre de dissémination (6) et y est réchauffé,
b) un circuit de refroidissement (22) intérieur pourvu de tuyaux de refroidissement (4), dans lesquels coule un deuxième fluide de refroidissement et qui sont disposés à l'intérieur de la chambre de dissémination (6), sur au moins une paroi (5) et/ou un plafond (17) de la chambre de dissémination (6), et reliés à un échangeur de chaleur (3), recueille la chaleur et
c) l'échangeur de chaleur (3) transmet la chaleur à un circuit de refroidissement (23) extérieur pourvu d'un puits de chaleur (8).
